# EUROPÄISCHE PATENTSCHRIFT

(11) **EP 3 900 258 B1**
(45) Veröffentlichungstag und Bekanntmachung des Hinweises auf die Patenterteilung: **13.09.2023**
(21) Anmeldenummer: 19813512.1
(22) Anmeldetag: 03.12.2019
(51) Int. Cl.: H04L 9/32, G06F 21/55, G06F 21/64, G06F 21/73, G06F 21/86

(54) **VERFAHREN ZUM ÜBERWACHEN DER INTEGRITÄT EINES PHYSISCHEN OBJEKTS**
METHOD FOR GUARDING THE INTEGRITY OF A PHYSICAL OBJECT
PROCÉDÉ POUR GARDER L'INTÉGRITÉ D'UN OBJECT PHYSIQUE

(30) Priorität: 19.12.2018 DE 102018132996
(43) Veröffentlichungstag der Anmeldung: 27.10.2021
(73) Patentinhaber: Uniscon universal identity control GmbH, 80339 München (DE)
(72) Erfinder: JÄGER, Hubert, 82049 Pullach (DE); WÜRL, Andreas, 81373 München (DE); KARATZAS, Christos, 81241 München (DE)
(74) Vertreter: 2s-ip Schramm Schneider Bertagnoll Patent- und Rechtsanwälte Part mbB
(86) Internationale Anmeldenummer: PCT/EP2019/083458
(87) Internationale Veröffentlichungsnummer: WO 2020/126469

(56) Entgegenhaltungen:
- EP-A1- 3 101 586
- WO-A2-2004/104899
- WO-A2-2007/031908

## Beschreibung

### Gebiet der Erfindung

Die Erfindung betrifft ein Verfahren zum Überwachen der Integrität eines physischen Objekts und ein physisches Objekt, das so ausgestaltet ist, dass seine Integrität überwacht werden kann.

### Hintergrund der Erfindung

Bestimmte physische Objekte müssen zyklisch geprüft werden, um deren Integrität festzustellen. "Physische Objekte" werden nachfolgend vereinfacht als "Objekte" bezeichnet. Solche Überprüfungen sind beispielsweise aufgrund gesetzlicher Vorgaben notwendig. In bestimmten Fällen muss bzw. soll eine solche Überprüfung durch unabhängige Institutionen, etwa einer Prüforganisation, durchgeführt werden. Beispielsweise kann eine Prüforganisation beauftragt werden, Abgassensoren eines Heizkraftwerkes in regelmäßigen Abständen, z.B. jährlich, zu prüfen, um unter anderem die Integrität der Abgassensoren festzustellen. Ziel solcher Integritätsprüfungen ist es, festzustellen, ob das zu prüfende Objekt manipuliert wurde.

Eine solche Integritätsprüfung kann neben Sensoren für eine Vielzahl verschiedenster Objekte durchgeführt werden, wobei die Erfindung nachfolgend an Beispiel eines Sensors erläutert wird.

Bei einer herkömmlichen periodischen Begutachtung muss ein Prüfer vor Ort den Sensor in Augenschein nehmen und eine herkömmliche Plombe anbringen. Falls der Sensor an einem Sensorgateway angeschlossen ist, kann der Prüfer außerdem auch den Anschluss des Sensors an dem Sensorgateway prüfen und sich von der Vertrauenswürdigkeit und der Integrität des Sensorgateways überzeugen. Wenn der Prüfer zur nächsten periodischen Begutachtung anreist, kann er an der Unversehrtheit der Plombe auf die Integrität des Sensors schließen. Beim Sensorgateway hat er außer Vermutungen über den äußeren Augenschein wenig oder keine Anhaltspunkte die Integrität des Sensorgateways anzunehmen.

Ein solches Sensorgateway kann vorgesehen sein, wenn die Sensordaten beispielsweise an eine externe Stelle oder an eine zentrale Datenverarbeitungseinrichtung übertragen werden müssen, wo sie beispielsweise ausgewertet werden können, um etwa außerhalb eines Normbereiches liegende Sensorwerte zu detektieren.

Solche periodische Begutachtungen bzw. Prüfungen haben allerdings den Nachteil, dass zwischen zwei Begutachtungen der Betreiber des Sensors den Sensor manipulieren kann oder gar durch einen anderen Sensor ersetzen kann. Ein solcher Austausch oder eine Manipulation würde erst bei der nächsten Begutachtung durch den Prüfer entdeckt werden.

Zudem könnte auch das Sensorgateway manipuliert werden, über das die Sensordaten an die externe Stelle oder an die Datenverarbeitungseinrichtung weitergeleitet werden. Durch eine Manipulation des Sensorgateways könnte der Betreiber des Sensors eine Manipulation der Sensordaten erreichen, sodass manipulierte Sensordaten an die externe Stelle oder an die Datenverarbeitungseinrichtung weitergeleitet würden. Manipulationen am Sensorgateway sind vom Prüfer zudem nur schwer oder gar nicht erkennen.

Die Druckschrift EP 3 101 586 zeigt ein derartiges Objekt das in regelmäßigen Abstände aufgetragen wird, einen Fingerabdruck an einem Server zu schicken.

### Aufgabe der Erfindung

Aufgabe der vorliegenden Erfindung ist es daher, Lösungen bereitzustellen, die es ermöglichen, physische Objekte kontinuierlich zu überwachen, um deren Integrität ebenfalls kontinuierlich überprüfen zu können. Damit sollen zeitnah, vorzugsweise in Echtzeit Manipulationen am Objekt erkannt werden, ohne dass hierfür ein Prüfer das Objekt vor Ort in Augenschein nehmen muss.

### Erfindungsgemäße Lösung

Gelöst wird diese Aufgabe mit einem Verfahren zum Überwachen der Integrität eines physischen Objekts sowie mit einem Objekt, das so ausgestaltet ist, dass seine Integrität überwacht werden kann, gemäß den unabhängigen Patentansprüchen. Vorteilhafte Ausgestaltungen der Erfindung sind in den jeweiligen abhängigen Patentansprüchen angegeben.

Bereit gestellt wird demnach ein Verfahren zum Überwachen der Integrität gemäß dem Gegenstand des Anspruchs 1.

In der Speichereinrichtung der Elektronik kann ein privater kryptographischer Schlüssel gespeichert sein, wobei die Antwort vor der Übertragung an die Servereinrichtung mit diesem privaten Schlüssel signiert wird.

In der Speichereinrichtung der Elektronik ist ein öffentlicher kryptographischer Schlüssel der Servereinrichtung gespeichert, wobei die Antwort vor der Übertragung an die Servereinrichtung mit diesem öffentlichen Schlüssel verschlüsselt wird.

Das digitale Geheimnis und/oder der private Schlüssel können sicher und vertraulich in der Speichereinrichtung der Elektronik gespeichert werden.

Vorteilhaft ist es, wenn das Objekt mit einem Objekt-Gateway gekoppelt wird, wobei das Objekt-Gateway mit dem Kommunikationsnetzwerk gekoppelt ist, und wobei das Objekt über das Objekt-Gateway und das Kommunikationsnetzwerk mit der Servereinrichtung kommuniziert.

Das Objekt-Gateway kann die Antwort des Objektes entgegennehmen, die entgegengenommene Antwort mit einem dem Objekt-Gateway zugeordneten privaten kryptographischen Schlüssel signieren und die so signierte Antwort an die Servereinrichtung weiterleiten.

Vorteilhaft ist es, wenn die Elektronik angepasst ist, Manipulationen an der Elektronik zu detektieren, und bei einer Detektion einer Manipulation der Elektronik das digitale Geheimnis und/oder den privaten Schlüssel in der Speichereinrichtung löscht.

Vorteilhaft ist es, wenn das Objekt kontinuierlich Anfragen der Servereinrichtung empfängt, wobei sich die digitale Zeichenkette der Anfrage über die Zeit, vorzugsweise mit jeder Anfrage ändert.

Vorteilhaft ist es ferner, wenn das Objekt zumindest teilweise mit einer Folie ummantelt ist, wobei in der Folie eine Anzahl von elektrisch leitenden Leiterbahnen angeordnet sind, die mit der Elektronik des Objektes gekoppelt oder koppelbar sind, wobei physikalische Eigenschaften der Leiterbahnen den digitalen Fingerabdruck des Objektes bilden.

Ferner ist es Vorteilhaft, wenn die physikalischen Eigenschaften der Leiterbahnen einen Leitwert der Leiterbahnen und eine elektrische Kapazität zwischen den Leiterbahnen umfassen.

Vorteilhaft ist es, wenn die Folie so an dem Objekt angeordnet ist oder die Leiterbahnen in der Folie so verlaufen, dass eine Manipulation des Objektes nicht ohne Änderung der physikalischen Eigenschaften der Leiterbahnen möglich ist.

Nach dem Anbringen der Folie an dem Objekt und vor dem ersten Empfangen einer Anfrage können die physikalischen Eigenschaften der Leiterbahnen ermittelt werden und die ermittelten physikalischen Eigenschaften als digitaler Fingerabdruck zusammen mit einer Kennungen des Objektes an die Servereinrichtung übertragen werden.

Vorteilhaft ist es, wenn der digitaler Fingerabdruck zusammen mit der Kennungen des Objektes über einen Kommunikationskanal an die Servereinrichtung übertragen wird, der verschieden von jenem Kommunikationskanal ist, über den das Objekt die Anfrage von der Servereinrichtung empfängt bzw. über den das Objekt die Antwort an die Servereinrichtung überträgt.

Die Servereinrichtung kann in einer versiegelten Umgebung betrieben werden.

### Kurzbeschreibung der Figuren

Einzelheiten und Merkmale der Erfindung sowie konkrete Ausführungsbeispiele der Erfindung ergeben sich aus der nachfolgenden Beschreibung in Verbindung mit der Zeichnung, wobei die Erfindung nicht auf die nachfolgend beschriebenen Ausführungsbeispiele beschränkt ist. Es zeigt:
- Fig. 1: ein Blockdiagramm eines Systems, anhand dessen das erfindungsgemäße Verfahren erläutert wird, und
- Fig. 2: ein Bespiel eines erfindungsgemäßen physischen Objektes, am Beispiel eines Sensors.

### Detaillierte Beschreibung der Erfindung

Das erfindungsgemäße Verfahren wird am Beispiel eines Sensors, der ein physisches Objekt im Sinne der vorliegenden Erfindung ist, näher beschrieben. Gleichwohl lässt sich das erfindungsgemäße Verfahren für andere physische Objekte anwenden, um die Integrität der physischen Objekte zu ermitteln bzw. festzustellen

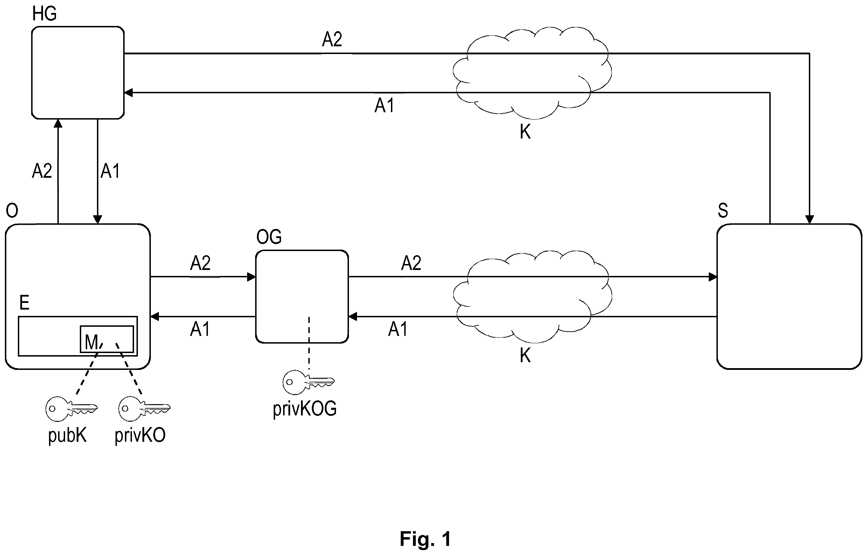

**Fig. 1** zeigt hierzu ein Blockdiagramm eines Systems, in dem ein Sensor O (= physisches Objekt) eingebunden ist. Der Sensors O wird fortlaufend überwacht, um die Integrität des Sensors zu validieren.

"Fortlaufend" bedeutet, dass zyklisch, vorzugsweise in kleinen zeitlichen Abständen überprüft wird, ob der Sensor manipuliert wurde und damit die Integrität des Sensors nicht mehr gegeben ist. Dadurch kann weitgehend in Echtzeit eine Manipulation des Sensors detektiert werden. "Echtzeit" bedeutet in diesem Zusammenhang, dass eine Manipulation zeitnah nach der Manipulation festgestellt wird. Liefert ein Sensor beispielsweise nur alle 7 Tage einen Messwert, dann kann die Bedingung "Echtzeit" auch dann noch erfüllt sein, wenn eine Manipulation innerhalb von sieben Tagen erkennt wird - in diesem Fall könnte der letzte Messwert als nicht valide bzw. nicht vertrauenswürdig verworfen werden, da aufgrund der erkannten Manipulation die Vertrauenswürdigkeit des Messwertes nicht mehr garantiert werden kann.

Eine Manipulation des Sensors kann beispielsweise vorliegen, wenn der Sensor (z.B. missbräuchlich) ausgetauscht wurde oder der Sensor in sonstiger Weise mechanisch manipuliert wurde.

In dem in Fig. 1 gezeigten Beispiel ist der Sensor O mit einem Objektgateway OG, das hier als Sensorgateway OG ausgebildet ist, gekoppelt. Der Sensor O kommuniziert über das Sensorgateway OG und über ein Kommunikationsnetzwerk K mit einer Servereinrichtung S. In einer besonderen Ausgestaltung der Erfindung kann der Sensor S auch ohne das Sensorgateway OG mit der Servereinrichtung kommunizieren, sofern der Sensor SO hierzu entsprechend angepasst ist.

Die Servereinrichtung S ist angepasst, die Integrität des Sensors O zu überwachen. Auf eine Überprüfung Sensors O vor Ort durch einen Prüfer kann so verzichtet werden. Wesentlich Vorteil ist aber, dass die Integrität des Sensors O auf diese Weise fortlaufend überwacht werden kann, gegebenenfalls in sehr kleinen zeitlichen Abständen, etwa jede Stunde oder jede Minute bis hin zu noch kleineren zeitlichen Abständen. Dadurch wird auch eine Überwachung der Integrität von physischen Objekten möglich, die bisher aufgrund der kleinen zeitlichen Abstände nicht überwacht werden konnten.

Der Sensor O weist neben der eigentlichen Sensorelektronik eine weitere Elektronik E auf, die ihrerseits eine Speichereinrichtung M aufweist bzw. die mit einer Speichereinrichtung M gekoppelt ist. Die Elektronik E ist angepasst, einen digitalisierbaren Fingerabdruck des Sensors zu ermitteln. Der digitalisierbaren Fingerabdruck des Sensors ist so ausgestaltet, dass Manipulationen am Sensor oder des Sensors zu einer Änderungen dieses Fingerabdruckes führen, sodass die Servereinrichtung S anhand des Fingerabdruckes eine Manipulation des Sensors O und damit einer Verletzung der Integrität des Sensors O erkennen kann.

Der Fingerabdruck des Sensors O kann beispielsweise von vorbestimmten physikalischen Eigenschaften des Sensors abgeleitet werden bzw. vorbestimmte physikalische Eigenschaften des Sensors können den Fingerabdruck des Sensors bilden. Beispielsweise können in einem Gehäuse des Sensors O elektrische Leiterbahnen integriert sein, wobei die elektrische Kapazität zwischen den Leiterbahnen charakteristisch für den konkreten Sensor ist, sodass die elektrische Kapazität zwischen den Leiterbahnen als Fingerabdruck des Sensors verwendet werden kann. Eine Manipulation des Gehäuses würde zu einer Änderung dieser für den Sensor charakteristischen Kapazität und damit auch zu einer Änderung des Fingerabdruckes führen.

In einem anderen Beispiel könnten in Inneren des Sensors Widerstandelemente angeordnet sein, wobei eine Manipulation des Sensors zu einer Änderung des für diesen Sensor charakteristischen Widerstandwertes führt. In einem noch anderem Beispiels könnte das Innere des Sensorgehäuses mit einem für den konkreten Sensor charakteristischen Unter- oder Überdruck beaufschlagt werden, sodass Manipulationen am Sensor zu einer Änderungen des Unter- oder Überdruck führen, und damit zu einer Änderung des Fingerabdruckes. Diese physikalischen Eigenschaften können auch kombiniert werden, sodass der Fingerabdruck durch eine Kombination dieser physikalischen Eigenschaften gebildet wird, und eine Änderung einer dieser physikalischen Eigenschaften zu einer Änderung des charakteristischen Fingerabdruckes führt.

Damit der Sensor O von der Servereinrichtung S überwacht, d.h. die Servereinrichtung die Integrität des Sensors überwachen kann, muss der Sensor O in das von dem Server S zu überwachende Inventar (= Menge an zu überwachenden Objekten) eingebunden werden. Das heißt, der Sensor muss der Servereinrichtung bekannt gemacht werden, was typischerweise bei oder direkt nach der Installation des Sensors durch einen Prüfer vorgenommen wird, der vorzugsweise gegenüber dem Betreiber der Servereinrichtung vertrauenswürdig ist.

### Inventarisierung des physischen Objektes

Nach der Installation / Montage des Sensors O kann der Prüfer mit einem Handgerät HG den Fingerabdruck des Sensors O auslesen. Hierzu kann der Prüfer das Handgerät HG mit der Elektronik E verbinden (drahtgebunden oder drahtlos, was letztlich von der konkreten Ausgestaltung des Sensors abhängt). Die Elektronik kann dann auf Anforderung des Handgerätes die für den Sensor charakteristischen physikalischen Eigenschaften ermitteln und diese als Fingerabdruck des Sensors an das Handgerät übertragen. Zusätzlich kann die Elektronik E des Sensors O auch eine Kennung des Sensors, die in dem Speicher M gespeichert sein kann, an das Handgerät HG übertragen. Die Kennung des Sensors kann aber auch von dem Handgerät erzeugt und an die Elektronik des Sensors übertragen werden. Die Kommunikation zwischen dem Handgerät und dem Sensor kann verschlüsselt erfolgen.

In einer Ausgestaltung der Erfindung ist in der Speichereinrichtung M der Elektronik E ein kryptographisches, individuell dem Sensor zugeordnetes Schlüsselpaar privKO, pubK gespeichert. Den öffentlichen kryptographischen Schlüssel pubK kann die Elektronik E an das Handgerät HG übertragen. Der private kryptographische Schlüssel privKO des Sensors O wird vertraulich und manipulationssicher in dem Speicher M der Elektronik E gespeichert.

Das kryptographische Schlüsselpaar kann bei der Produktion des Sensors O erzeugt und in dem Speicher M des Sensors gespeichert werden.

Alternativ kann das kryptographische Schlüsselpaar auch während der Inventarisierung des Sensors O von dem Handgerät HG erzeugt werden. In diesem Fall überträgt des Handgerät HG das Schlüsselpaar (zumindest aber den privaten Schlüssel privKO) an den Sensor O, wo es in dem Speicher M gespeichert wird. Der öffentliche Schlüssel pubK muss dann nicht mehr von der Elektronik E an das Handgerät HG übertragen werden. Die Übertragung des Schlüsselpaares kann ebenfalls verschlüsselt erfolgen.

Nachdem im Handgerät die Kennung des Sensors und der digitale Fingerabdruck (und gegebenenfalls der öffentliche Schlüssel pubK des Sensors O) vorliegen, werden diese Daten von dem Handgerät HG an die Servereinrichtung S (vorzugsweise verschlüsselt) übertragen. Die an die Servereinrichtung zu übertragenden Daten können von dem Handgerät HG signiert werden, sodass die Servereinrichtung die Integrität der übertragenen Daten prüfen kann.

Die Servereinrichtung speichert diese Daten und ordnet der Kennung des Sensors den Fingerabdruck und gegebenenfalls den öffentlichen Schlüssel pubK des Sensors zu.

In einer alternativen Ausgestaltung der Erfindung kann die Inventarisierung eines physischen Objektes O auch von dem Objektgateway OG abgewickelt werden. Allerdings kann das Objektgateway OG nicht feststellen, ob es sich bei einem neu zu inventarisierenden Objekt tatsächlich um ein neues Objekt handelt oder nicht doch um ein Objekt, das (z.B. in betrügerischer Absicht) anstelle eines bereits inventarisierten Objektes an das Objektgateway angeschlossen wurde. Vorteilhaft ist es daher, die Inventarisierung durch einen Prüfer mit einem Handgerät vornehmen zu lassen.

Dies Servereinrichtung S kann nun den Sensor bzw. dessen Integrität überwachen.

### Überwachen der Integrität des physischen Objektes

Um die Integrität des Sensors O zu überprüfen, erzeugt die Servereinrichtung S zunächst eine für diese Überprüfung individuelle Zeichenkette. Diese individuelle Zeichenkette wird als an den Sensor O adressierte Anfrage A1 an den Sensor O geschickt. Die Adresse des Sensors O kann der Servereinrichtung S im Rahmen der vorstehend genannten Inventarisierung bekannt gemacht werden, etwa indem das Handgerät HG die Adresse zusammen mit den anderen Daten an die Servereinrichtung S überträgt. Die Adresse kann beispielsweise eine IPv4- oder IPv6-Adresse sein. Optional kann die Servereinrichtung S die Anfrage A1 mit dem öffentlichen Schlüssel pubK des Sensors O verschlüsseln. Vorteilhaft ist es, wenn die Servereinrichtung für jede Anfrage A1 eine neue Zeichenkette erzeugt
Der Sensor O empfängt die Anfrage A1 und führt gegebenenfalls eine Entschlüsselung der Anfrage A1 durch.

Mit der Anfrage A1 wird der Sensor O bzw. die Elektronik E des Sensors aufgefordert der Servereinrichtung den digitalen Fingerabdruck des Sensors mitzuteilen.

Hierzu ermittelt die Elektronik E des Sensors O aus den vorbestimmten physikalischen Eigenschaften des Sensors den zum Zeitpunkt der Anfrage aktuellen Fingerabdruck. Die digitale Form des Fingerabdruckes des Sensors wird dann von der Elektronik des Sensors mit der empfangenen Zeichenkette und mit einem der Servereinrichtung bekannten Geheimnis kombiniert. Diese Kombination bildet eine Antwort A2, die von dem Sensor O bzw. von der Elektronik E an die Servereinrichtung geschickt wird. Vorteilhaft ist es, wenn die Antwort A2 vor der Übertragung verschlüsselt wird.

Das Geheiminis kann vertraulich und nicht manipulierbar in dem Speicher M der Elektronik E gespeichert sein. Der für die Verschlüsselung der Antwort benötigte öffentliche Schlüssel des Servers kann ebenfalls in dem Speicher M der Elektronik gespeichert sein.

Das Geheimnis kann im Rahmen der Inventarisierung erzeugt und in dem Speicher der M der Elektronik gespeichert werden. In einer Ausgestaltung kann das Geheimnis von dem Handgerät HG erzeugt und sowohl an den Sensor als auch an die Servereinrichtung übertragen werden. Die Servereinrichtung kann dann das Geheimnis der entsprechenden Sensorkennung zuordnen. Alternativ kann das Geheimnis auch von der Servereinrichtung oder von dem Sensor selbst erzeugt werden. Das Geheimnis wird dann von der Servereinrichtung an den Sensor bzw. von dem Sensor an die Servereinrichtung übertragen.

Der öffentliche Schlüssel der Servereinrichtung S kann ebenfalls im Rahmen der Inventarisierung von der Servereinrichtung über das Handgerät HG an den Sensor übertragen werden.

Weiter ist es vorteilhaft, wenn die Antwort A2 vor der Übertragung an die Servereinrichtung S signiert wird, vorzugsweise mit dem in dem Speicher M hinterlegten privaten Schlüssel privKO des Sensors O. Die Servereinrichtung kann so die Integrität der Antwort A2 verifizieren.

Damit von der Servereinrichtung S anhand der Antwort A2 auch geprüft werden kann, ob der Sensor O an einem bestimmten Sensorgateway OG angeschlossen ist (sofern ein Anschluss des Sensors an ein Sensorgateway vorgesehen ist), kann es vorgesehen sein, dass das Sensorgateway OG die Antwort A2 vor dem Weiterleiten an die Servereinrichtung S mit seinem privaten Schlüssel privOG signiert. Hintergrund ist der, dass ein Sensor an ein anderes Sensorgateway angeschlossen werden kann ohne dass sich der Fingerabdruck des Sensors ändert und der Sensor dennoch von der Servereinrichtung korrekt adressiert werden kann. Das Anschließen eines Sensors an ein anderes Sensorgateway kann aber auch eine Manipulation des Sensors sein, die bei Bedarf von der Servereinrichtung erkannt werden soll.

Die Servereinrichtung S prüft für die empfangene Antwort A2 die Signatur des Absenders (= Sensor) und gegebenenfalls die Signatur des Sensorgateways, um die Integrität der Antwort A2 festzustellen.

Der Server kann nun den für diesen Sensor während der Inventarisierung gespeicherten Fingerabdruck mit dem gemeinsam bekannten Geheimnis und der Zeichenkette, die der Server mit der Anfrage A1 an den Sensor geschickt hat, kombinieren und diese Kombination mit seinem öffentlichen Schlüssel, den auch der Sensor für das Verschlüsseln der Antwort A2 verwendet hat, verschlüsseln. Ist das Ergebnis dieser Verschlüsselung identisch mit der verschlüsselten Antwort A2, dann ist auch der mit der verschlüsselten Antwort A2 übertragene Fingerabdruck identisch mit dem für diesen Sensor in der Servereinrichtung gespeicherten Fingerabdruck, sodass die Integrität des Sensors festgestellt wird. Zudem wird damit auch die Identität des Sensors verifiziert.

Alternativ kann die Servereinrichtung die empfangene Antwort A2 entschlüsseln, da sie von dem Sensor ja mit dem öffentlichen Schlüssel des Servers verschlüsselt wurde. Aus der entschlüsselten Antwort A2 kann dann der Fingerabdruck extrahiert werden und mit dem für diesen Sensor in der Servereinrichtung gespeicherten Fingerabdruck verglichen werden.

In einer alternativen Ausgestaltung der Erfindung kann das Prüfen bzw. Testen der Integrität des Sensors auch über das Handgerät HG abgewickelt werden. Das Handgerät kann hierbei die Aufgabe des Sensorgateways OG übernehmen, d.h. die Antwort A2 des Sensors entgegennehmen, mit dem privaten Schlüssel des Handgeräts signieren und die signierte Antwort A2 an die Servereinrichtung übertragen.

Die Integritätsprüfung mit dem Handgerät ist insbesondere dann vorteilhaft, wenn der Sensor nicht in der Lage ist oder nicht dafür ausgestaltet ist mit der Servereinrichtung zu kommunizieren. Das Handgerät kann sich dann mit dem Sensor verbinden, wodurch die Elektronik des Sensors den Fingerabdruck, das Geheimnis und den privaten Schlüssel privKO des Sensors an das Handgerät übertragen kann. Das Handgerät HG kann dann von dem Server S die Anfrage A1 für diesen Sensor anfragen, worauf der Server für diesen Sensor die Anfrage A1 erzeugt und sie an das Handgerät überträgt. Das Handgerät kann dann den vom Sensor O empfangenen Fingerabdruck mit dem vom Sensor O empfangenen Geheimnis und mit der von der Servereinrichtung S empfangenen Zeichenkette kombinieren, und die Kombination mit dem privaten Schlüssel privKO des Sensors signieren. Die so erhaltene Antwort A2 kann das Handgerät dann noch mit seinem privaten Schlüssel signieren und anschließend an die Servereinrichtung übertragen.

Die Integritätsprüfung mit dem Handgerät ist aber auch dann vorteilhaft, wenn der Sensor lediglich über eine nicht aktive Elektronik E verfügt, die aber von dem Handgerät HG mit elektrischen Strom versorgt werden kann. Nach Anschluss des Handgerätes an den Sensor wird die Elektronik E des Sensors aktiviert. Die Integritätsprüfung kann dann so durchgeführt werden, wie vorstehend beschrieben.

Erfindungsgemäß ist es auch möglich, Sensoren kontinuierlich nach dem erfindungsgemäßen Verfahren zu überwachen, die von Haus aus über keine charakteristischen physikalischen Merkmale verfügen bzw. für die keine charakteristischen physikalischen Merkmale abgeleitet werden können, die wiederum für einen Ableiten eines Fingerabdruckes herangezogen werden können. In diesem Fall ist es vorgesehen, den Sensor O mit einer selbstaushärtenden Folie zu versehen. Mit dieser Folie kann der komplette Sensor oder Teile des Sensors ummantelt werden. Die Folie weist eine Vielzahl von elektrischen Leiterbahnen auf. Nach dem Anlegen der Folie an dem Sensor wird diese ausgehärtet, wodurch sich beispielsweise die Kapazität zwischen den Leiterbahnen auf einen Wert einstellt, der charakteristisch für die ausgehärtet Form der Folie ist. Aus den Kapazitäten kann dann ein Fingerabdruck für den Sensor O abgeleitet werden, der dann im Rahmen der Inventarisierung dem Server für diesen Sensor bekannt gemacht wird. Ein nachträgliches Verändern der ausgehärteten Folie (etwa durch teilweises Entfernen oder durch Beschädigen der Folie) für zu einer Änderung der charakteristischen Kapazitäten und damit zu einer Änderung des Fingerabdruckes des Sensors.

Die Folie kann mit einer aktiven Elektronik gekoppelt sein, die hierbei die Aufgaben wie in dem obigen Bespiel eines Sensors beschrieben übernimmt.

Alternativ kann die Folie auch mit einer Elektronik E gekoppelt sein, die beispielsweise mit einem Handgerät HG mit elektrischem Strom versorgt wird.

Anstelle einer Folie können auch andere Maßnahmen vorgesehen werden, mit denen ein Sensor nachträglich ausgestattet werden kann und mit denen sich eine Veränderung eines für den Sensor charakteristischen Fingerabdruckes, d.h. eine Manipulation feststellen lässt.

Die Servereinrichtung S selbst ist Bestandteil einer versiegelten Infrastruktur (versiegelte Umgebung).

Die versiegelte Infrastruktur umfasst im Wesentlichen gekapselte Zonen bzw. Segmente eines Rechenzentrums, die durch spezielle Maßnahmen gesichert sind. Derartige Maßnahmen können beispielsweise spezielle Räume mit speziellen Sicherheitstüren sein. Zudem kann ein Netz von Sensoren vorgesehen sein, mit dem die versiegelte Infrastruktur gesichert wird, sodass weder physisch vor Ort noch logisch über eine elektronische Schnittstelle ein unberechtigter Zugriff möglich ist, ohne hierbei einen Alarm auszulösen. Ein Zugriff von außen auf die in der versiegelten Infrastruktur gespeicherten Daten wird nur über einige wenige ganz spezielle Schnittstellen zugelassen, wobei auch diese Schnittstellen mit speziellen Filtern überwacht werden, um auch Angriffsversuche über diese wenigen speziellen Schnittstellen zu erkennen.

In der Servereinrichtung der versiegelten Infrastruktur werden die privaten Schlüssel des Servers, die im Rahmen der Inventarisierung an den Server übertragenen Fingerabdrücke, die Zuordnung dieser Fingerabdrücke zu den jeweiligen physischen Objekten sowie das Geheimnis des Servers gespeichert. Vorteilhaft ist es, wenn diese Daten ausschließlich in einem volatilen Speicher des Servers gespeichert werden. Bei einem detektierten unberechtigten Zugriff auf den Server kann die Stromversorgung jedenfalls des volatilen Speichers unterbrochen werden, sodass alle in dem volatilen Speicher gespeicherten Daten unverzüglich gelöscht werden. Der Inhalt des volatilen Speichers wird vorzugsweise über besondere, speziell gesicherte Kommunikationsverbindungen auf einen Backup-Server repliziert, der wiederum Bestandteil einer versiegelten Infrastruktur ist. Nach einem Löschen des volatilen Speichers des Servers S kann der Inhalt des volatilen Speichers wieder hergestellt werden, ohne dass eine erneute Inventarisierung durchgeführt werden muss.

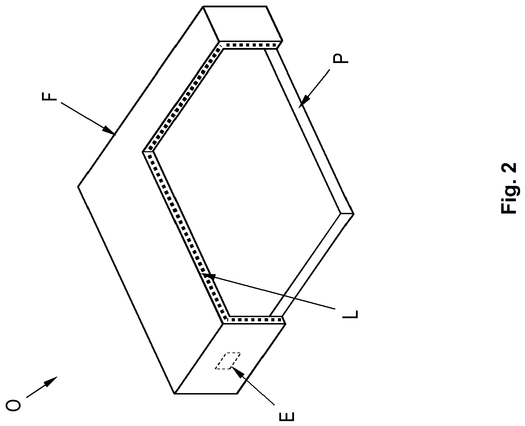

**Fig. 2** zeigt ein Bespiel eines erfindungsgemäßen physischen Objektes O, am Beispiel eines Sensors.

Der Sensor O besteht hier im Wesentlichen aus einer Platine P, auf die sensorspezifischen elektrischen Bauteile (hier nicht dargestellt) angeordnet sind. Um das hier nicht gezeigte Sensorgehäuse ist eine Folie F angeordnet, die eine Vielzahl von elektrischen Leiterbahnen L aufweist. Die elektrischen Leiterbahnen L sind in die Folie eingearbeitet. Die elektrischen Leiterbahnen L sind zudem mit einer Elektronik E verbunden, die hier angepasst ist, die Kapazitäten zwischen den Leiterbahnen L zu messen und daraus einen für den Sensors O charakteristischen Fingerabdruck abzuleiten. Die Elektronik E kann in die Folie F integriert sein, etwa als ASIC oder als Die. Alternativ kann die Elektronik auch auf der Platine P angeordnet sein.

Wie vorstehend erläutert, kann die Elektronik als aktive Elektronik oder als passive Elektronik ausgestaltet sein, wobei die passive Elektronik von dem Handgerät mit elektrischer Energie versorgt wird.

Für den Anschluss des Handgerätes an die Elektronik (zur Energieversorgung und/oder für den Datenaustausch) kann eine spezielle Schnittstelle vorgesehen sein. Alternativ kann die Elektronik auch drahtlos mit dem Handgerät kommunizieren, was insbesondere dann vorteilhaft ist, wenn es sich beider Elektronik um eine aktive Elektronik handelt, das heißt, um eine Elektronik, die nicht vom Handgerät mit elektrischer Energie versorgt werden muss.

Bei der Folie F kann es sich um eine aushärtbare Folie handeln, die nach dem Anbringen an den Sensor ausgehärtet wird und damit ihr endgültige Form erhält. Durch die durch den Aushärtevorgang erhaltene Form stellen sich zwischen den Leiterbahnen für diese Form charakteristische Kapazitäten ein, die als Basis für den Fingerabdruck dienen. Ein so erhaltener Fingerabdruck eines Sensors kann praktisch nicht reproduziert werden.

Die Folie kann von einem Prüfer, der die Inventarisierung des Sensors vornimmt, an dem Sensor angebracht werden. Alternativ kann die Folie bereits bei der Herstellung des Sensors an dem Sensor angeordnet werden, wobei die Folie dann nicht notwendigerweise am Sensorgehäuse angebracht werden muss, sondern auch innerhalb des Gehäuses angebracht werden kann.

### Bezugszeichen:

- A1: Anfrage
- A2: Antwort auf die Anfrage A1
- E: Elektronik
- F: Folie, vorzugsweise selbstaushärtend
- GH: Handgerät
- K: Kommunikationsnetzwerk
- L: elektrische Leiterbahnen
- M: Speichereinrichtung der Elektronik bzw. mit der Elektronik gekoppelt
- O: Objekt (dessen Integrität geprüft/überwacht werden soll), z.B. ein Sensor
- OG: Objektgateway, z.B. ein Sensorgateway
- P: Platine des Sensors
- privKO: privater kryptographischer Schlüssel des Objekts O
- privKOG: privater kryptographischer Schlüssel des Objektgateways OG
- pubK: öffentlicher kryptographischer Schlüssel des Objekts O
- S: Servereinrichtung

## Patentansprüche

1. Verfahren zum Überwachen der Integrität eines physischen Objekts (O), wobei
- das Objekt (O) angepasst ist, über ein Kommunikationsnetzwerk (K) mit einer Servereinrichtung (S) zu kommunizieren,
- dem Objekt (O) eine eindeutige Kennung zugeordnet ist,
- vorbestimmte physikalische Eigenschaften des Objektes (O) einen digitalen Fingerabdruck (FP) des Objektes bilden, und
- das Objekt (O) eine Elektronik (E) mit einer Speichereinrichtung (M) aufweist, wobei die Elektronik angepasst ist, auf Anforderung den digitalen Fingerabdruck (FP) des Objektes (O) zu ermitteln,
- in der Speichereinrichtung (M) der Elektronik (E) ein öffentlicher kryptographischer Schlüssel (pubK) der Servereinrichtung (S) gespeichert ist,
- der digitale Fingerabdruck (FP) des Objektes (O) in der Servereinrichtung (S) gespeichert ist,
und wobei das Verfahren **gekennzeichnet ist dadurch**, dass:
- das Objekt (O) über das Kommunikationsnetzwerk (K) eine Anfrage (A1) der Servereinrichtung (S) empfängt, wobei die Anfrage eine digitale Zeichenkette (C) umfasst,
- die Elektronik des Objektes (O)
- in Reaktion auf die empfangene Anfrage (A1) den digitalen Fingerabdruck (FP) des Objektes ermittelt,
- den ermittelten digitalen Fingerabdruck (FP) mit einem der Servereinrichtung bekannten und in der Speichereinrichtung gespeicherten digitalen Geheimnis (G) und mit der empfangenen Zeichenkette (C) zu einer Antwort (A2) kombiniert, und
- das Objekt die Antwort (A2) über das Kommunikationsnetzwerk (K) zur Auswertung an die Servereinrichtung (S) überträgt, wobei die Antwort (A2) vor der Übertragung an die Servereinrichtung (S) mit öffentlichen Schlüssel (pubK) der Servereinrichtung (S) verschlüsselt wird,
- die Servereinrichtung (S) die verschlüsselte Antwort (A2) empfängt und
- den in der Servereinrichtung (S) gespeicherten Fingerabdruck mit dem der Servereinrichtung (S) bekannten Geheimnis und mit der Zeichenkette (C), die die Servereinrichtung (S) mit der Anfrage (A1) an das Objekt (O) geschickt hat, kombiniert,
- diese Kombination mit dem öffentlichen Schlüssel (pubK), den auch das Objekt (O) für das Verschlüsseln der Antwort (A2) verwendet hat, verschlüsselt, und
- prüft, ob das Ergebnis dieser Verschlüsselung identisch mit der verschlüsselten Antwort (A2) ist, wodurch die Integrität des Objektes festgestellt wird.

2. Verfahren nach dem vorhergehenden Anspruch, wobei in der Speichereinrichtung der Elektronik ein privater kryptographischer Schlüssel (privKO) gespeichert ist, wobei die Antwort (A2) vor der Übertragung an die Servereinrichtung (S) mit diesem privaten Schlüssel (privKO) signiert wird.

3. Verfahren nach einem der vorhergehenden Ansprüche, wobei das digitale Geheimnis (G) und/oder der private Schlüssel (privKO) sicher und vertraulich in der Speichereinrichtung der Elektronik gespeichert werden.

4. Verfahren nach einem der vorhergehenden Ansprüche, wobei das Objekt (O) mit einem Objekt-Gateway (OG) gekoppelt wird, wobei das Objekt-Gateway (OG) mit dem Kommunikationsnetzwerk (K) gekoppelt ist, und wobei das Objekt (O) über das Objekt-Gateway (OG) und das Kommunikationsnetzwerk (K) mit der Servereinrichtung (S) kommuniziert.

5. Verfahren nach dem vorhergehenden Anspruch, wobei das Objekt-Gateway (OG) die Antwort (A2) des Objektes (O) entgegennimmt, die entgegengenommene Antwort (A2) mit einem dem Objekt-Gateway (OG) zugeordneten privaten kryptographischen Schlüssel (privKOG) signiert und die so signierte Antwort an die Servereinrichtung weiterleitet.

6. Verfahren nach einem der Ansprüche 2 bis 5, wobei die Elektronik angepasst ist, Manipulationen an der Elektronik zu detektieren, und bei einer Detektion einer Manipulation der Elektronik das digitale Geheimnis (G) und/oder den privaten Schlüssel (privKO) in der Speichereinrichtung löscht.

7. Verfahren nach einem der vorhergehenden Ansprüche, wobei das Objekt (O) kontinuierlich Anfragen (A1) der Servereinrichtung (S) empfängt, wobei sich die digitale Zeichenkette (C) der Anfrage über die Zeit, vorzugsweise mit jeder Anfrage ändert.

8. Verfahren nach einem der vorhergehenden Ansprüche, wobei das Objekt (O) zumindest teilweise mit einer Folie ummantelt ist, wobei in der Folie eine Anzahl von elektrisch leitenden Leiterbahnen angeordnet sind, die mit der Elektronik des Objektes gekoppelt oder koppelbar sind, wobei physikalische Eigenschaften der Leiterbahnen den digitalen Fingerabdruck (FP) des Objektes bilden.

9. Verfahren nach dem vorhergehenden Anspruch, wobei die physikalischen Eigenschaften der Leiterbahnen einen Leitwert der Leiterbahnen und eine elektrische Kapazität zwischen den Leiterbahnen umfassen.

10. Verfahren nach einem der beiden vorhergehenden Ansprüche, wobei die Folie so an dem Objekt angeordnet ist oder die Leiterbahnen in der Folie so verlaufen, dass eine Manipulation des Objektes nicht ohne Änderung der physikalischen Eigenschaften der Leiterbahnen möglich ist.

11. Verfahren nach einem der drei vorhergehenden Ansprüche, wobei nach dem Anbringen der Folie an dem Objekt und vor dem ersten Empfangen einer Anfrage (A1) die physikalischen Eigenschaften der Leiterbahnen ermittelt werden und die ermittelten physikalischen Eigenschaften als digitaler Fingerabdruck zusammen mit einer Kennungen des Objektes an die Servereinrichtung übertragen werden.

12. Verfahren nach dem vorhergehenden Anspruch, wobei der digitaler Fingerabdruck zusammen mit der Kennungen des Objektes über einen Kommunikationskanal an die Servereinrichtung übertragen wird, der verschieden von jenem Kommunikationskanal ist, über den das Objekt die Anfrage (A1) von der Servereinrichtung (S) empfängt bzw. über den das Objekt die Antwort (A2) an die Servereinrichtung (S) überträgt.

13. Verfahren nach einem der vorhergehenden Ansprüche, wobei die Servereinrichtung in einer versiegelten Umgebung betrieben wird.

## Claims

1. Method for monitoring the integrity of a physical object (O), wherein
- the object (O) is suitable for communicating with a server (S) via a communication network (K),
- a unique identifier is assigned to the object (O),
- predetermined physical properties of the object (O) form a digital fingerprint (FP) of the object, and
- the object (O) has an electronic system (E) comprising a memory device (M), wherein the electronic system is suitable for ascertaining the digital fingerprint (FP) of the object (O) on request,
- a public cryptographic key (pubK) of the server (S) is stored in the memory device (M) of the electronic system (E), the digital fingerprint (FP) of the object (O) is stored in the server device (S),
and wherein the method is **characterized in that**:
- the object (O) receives a request (A1) from the server device (S) via the communication network (K), said request comprising a digital character string (C),
- the electronic system of the object (O)
- captures the digital fingerprint (FP) of the object in response to the received request (A1),
- combines the captured digital fingerprint (FP) with a digital secret (G), which is known to the server and is stored in the memory device, and with the received character string (C) to form a response (A2), and
- the object transmits the response (A2) via the communication network (K) to the server device (S) for evaluation, wherein the response (A2) is encrypted before the transmission to the server device (S) with public key (pubK) of the server device (S),
- the server device (S) receives the encrypted response (A2) and
- combines the fingerprint stored in the server device (S) with the secret known to the server device (S) and with the character string (C) that the server device (S) sent to the object (O) with the request (Al),
- encrypts this combination with the public key (pubK), which has also used the object (O) for the encryption of the response (A2), and
- checks whether the result of this encryption is identical to the encrypted response (A2), whereby the integrity of the object is determined.

2. Method according to the preceding claim, wherein a private cryptographic key (privKO) is stored in the memory device of the electronic system, wherein the response (A2) is signed with this private key (privKO) before it is transmitted to the server device (S).

3. Method according to either of the preceding claims, wherein the digital secret (G) and/or the private key (privKO) are stored securely and confidentially in the memory device of the electronic system.

4. Method according to any one of the preceding claims, wherein the object (O) is coupled to an object gateway (OG), wherein the object gateway (OG) is coupled to the communication network (K), and wherein the object (O) communicates with the server device (S) via the object gateway (OG) and the communication network (K).

5. Method according to the preceding claim, wherein the object gateway (OG) receives the response (A2) from the object (O), signs the received response (A2) with a private cryptographic key (privKOG) assigned to the object gateway (OG), and forwards the thus signed response to the server device.

6. Method according to any one of Claims 2 to 5, wherein the electronic system is suitable for detecting manipulations of the electronic system, and, when there is a detection of a manipulation of the electronic system, deletes the digital secret (G) and/or the private key (privKO) in the memory device.

7. Method according to any one of the preceding claims, wherein the object (O) continuously receives requests (Al) of the server device (S), wherein the digital character string (C) changes the request over time, preferably with each request.

8. Method according to any one of the preceding claims, wherein the object (O) is at least partially encased in a film, wherein a number of electrically conductive strip conductors which are coupled or can be coupled to the electronic system of the object are arranged in the film, wherein physical properties of the strip conductors form the digital fingerprint (FP) of the object.

9. Method according to the preceding claim, wherein the physical properties of the strip conductors include a conductance of the strip conductors and an electrical capacitance between the strip conductors.

10. Method according to either of the two preceding claims, wherein the film is arranged on the object or the strip conductors extend in the film in such a way that a manipulation of the object is not possible without changing the physical properties of the strip conductors.

11. Method according to any one of the three preceding claims, wherein the physical properties of the strip conductors are determined after the application of the film to the object and before the first reception of a request (Al) and the determined physical properties are transmitted together with an identifier of the object to the server device.

12. Method according to the preceding claim, wherein the digital fingerprint together with the identifiers of the object is transmitted to the server via a communication channel, which is different from that communication channel via which the object receives the request (Al) from the server device (S) or via which the object transmits the response (A2) to the server device (S).

13. Method according to any one of the preceding claims, wherein the server device is operated in a sealed environment.

## Revendications

1. Procédé permettant la surveillance de l'intégrité d'un objet (O) physique,
- l'objet (O) étant adapté pour communiquer avec un dispositif serveur (S) par l'intermédiaire d'un réseau de communication (K),
- un identifiant unique étant associé à l'objet (O),
- des propriétés physiques prédéterminées de l'objet (O) formant une empreinte numérique (FP) de l'objet, et
- l'objet (O) présentant une électronique (E) comportant un dispositif de mémorisation (M), l'électronique étant adaptée pour définir sur demande l'empreinte numérique (FP) de l'objet (O),
- une clé publique (pubK) cryptographique du dispositif serveur (S) étant mémorisée dans le dispositif de mémorisation (M) de l'électronique (E),
- l'empreinte numérique (FP) de l'objet (O) étant mémorisée dans le dispositif serveur (S),
et le procédé étant **caractérisé par le fait que** :
- l'objet (O) reçoit une requête (A1) du dispositif serveur (S) par l'intermédiaire du réseau de communication (K), la requête comprenant une chaîne de caractères (C) numérique,
- l'électronique de l'objet (O)
- en réponse à la requête (A1) reçue, définit l'empreinte numérique (FP) de l'objet,
- combine l'empreinte numérique (FP) définie avec un secret numérique (G) connu du dispositif serveur et mémorisé dans le dispositif de mémorisation et avec la chaîne de caractères (C) reçue pour former une réponse (A2), et
- l'objet transmet la réponse (A2) au dispositif serveur (S) par l'intermédiaire du réseau de communication (K) pour l'évaluation, la réponse (A2) étant chiffrée avec une clé publique (pubK) du dispositif serveur (S) avant d'être transmise au dispositif serveur (S),
- le dispositif serveur (S) reçoit la réponse (A2) chiffrée et
- combine l'empreinte mémorisée dans le dispositif serveur (S) avec le secret connu du dispositif serveur (S) et avec la chaîne de caractères (C) que le dispositif serveur (S) a envoyée à l'objet (O) avec la requête (A1),
- chiffre ladite combinaison avec la clé publique (pubK) que l'objet (O) a également utilisé pour le chiffrement de la réponse (A2), et
- vérifie si le résultat dudit chiffrement est identique à la réponse (A2) chiffrée, moyennant quoi l'intégrité de l'objet est constatée.

2. Procédé selon la revendication précédente, une clé privée (privKO) cryptographique étant mémorisée dans le dispositif de mémorisation de l'électronique, la réponse (A2) étant signée avec ladite clé privée (privKO) avant d'être transmise au dispositif serveur (S).

3. Procédé selon l'une des revendications précédentes, le secret numérique (G) et/ou la clé privée (privKO) étant mémorisés de manière sécurisée et confidentielle dans le dispositif de mémorisation de l'électronique.

4. Procédé selon l'une des revendications précédentes, l'objet (O) étant couplé à une passerelle d'objet (OG), la passerelle d'objet (OG) étant couplée au réseau de communication (K), et l'objet (O) communiquant avec le dispositif serveur (S) par l'intermédiaire de la passerelle d'objet (OG) et du réseau de communication (K).

5. Procédé selon la revendication précédente, la passerelle d'objet (OG) acceptant la réponse (A2) de l'objet (O), signant la réponse (A2) acceptée avec une clé privée (privKOG) cryptographique associée à la passerelle d'objet (OG) et transférant la réponse ainsi signée au dispositif serveur.

6. Procédé selon l'une des revendications 2 à 5, l'électronique étant adaptée pour détecter des manipulations sur l'électronique et, lors de la détection d'une manipulation de l'électronique, le secret numérique (G) et/ou la clé privée (privKO) dans le dispositif de mémorisation étant effacés.

7. Procédé selon l'une des revendications précédentes, l'objet (O) recevant en continu des requêtes (A1) du dispositif serveur (S), la chaîne de caractères (C) numérique de la requête variant dans le temps, de préférence à chaque requête.

8. Procédé selon l'une des revendications précédentes, l'objet (O) étant au moins partiellement recouvert d'un film, un certain nombre de pistes conductrices électriquement conductrices étant disposées dans le film, lesquelles pistes conductrices étant couplées ou pouvant être couplées à l'électronique de l'objet, des propriétés physiques des pistes conductrices formant l'empreinte numérique (FP) de l'objet.

9. Procédé selon la revendication précédente, les propriétés physiques des pistes conductrices comprenant une conductance des pistes conductrices et une capacité électrique entre les pistes conductrices.

10. Procédé selon l'une des deux revendications précédentes, le film étant disposé sur l'objet ou les pistes conductrices s'étendant dans le film de telle sorte qu'une manipulation de l'objet n'est pas possible sans modification des propriétés physiques des pistes conductrices.

11. Procédé selon l'une des trois revendications précédentes, après l'application du film sur l'objet et avant la première réception d'une requête (A1), les propriétés physiques des pistes conductrices étant définies et les propriétés physiques définies étant transmises au dispositif serveur sous forme d'empreintes numériques conjointement avec un identifiant de l'objet.

12. Procédé selon la revendication précédente, l'empreinte numérique étant transmise au dispositif serveur conjointement avec l'identifiant de l'objet par l'intermédiaire d'un canal de communication qui est différent du canal de communication par l'intermédiaire duquel l'objet reçoit la requête (A1) en provenance du dispositif serveur (S) ou par l'intermédiaire duquel l'objet transmet la réponse (A2) au dispositif serveur (S).

13. Procédé selon l'une des revendications précédentes, le dispositif serveur fonctionnant dans un environnement scellé.
